# EUROPÄISCHE PATENTSCHRIFT

(11) **EP 0 674 250 B1**
(45) Veröffentlichungstag und Bekanntmachung des Hinweises auf die Patenterteilung: **01.12.1999**
(21) Anmeldenummer: 95104307.4
(22) Anmeldetag: 23.03.1995
(51) Int. Cl.: G05D 19/02, B65G 27/32, G01G 13/295

(54) **Steuerung für Schwingfördereinrichtungen**
Control device for vibratory conveyors
Dispositif de contrôle pour transporteurs à vibrations

(30) Priorität: 24.03.1994 DE 4410244
(43) Veröffentlichungstag der Anmeldung: 27.09.1995
(73) Patentinhaber: MULTIPOND WÄGETECHNIK GMBH, D-84470 Waldkraiburg (DE)
(72) Erfinder:
(74) Vertreter: Lehn, Werner, Dipl.-Ing.

(56) Entgegenhaltungen:
- EP-A- 0 139 463
- DE-A- 3 740 919
- DE-U- 8 907 748
- US-A- 4 002 270
- US-A- 4 811 835

## Beschreibung

Die Erfindung betrifft eine Steuerung für Schwingfördereinrichtungen mit zumindest einer Fördervorrichtung, die von zumindest einem elektromechanischen Schwinger in mechanische Schwingungen versetzt wird, der von einem Ansteuerungselement mit einer Steuer-Wechselspannung versorgt wird, die von einer Ansteuerungseinheit festgelegt wird, die ein Steuersignal von einer zentralen Steuereinheit empfängt, der ein Förderleistungs-Sollwert vorgebbar ist, und mit einer Wechselspannungsquelle zur Versorgung des Ansteuerungselements mit einer Wechselspannung.

Beispielsweise für das Beschicken von Linearwaagen, Kombinationswaagen oder selbsttätigen Waagen anderer Art werden Schwingfördereinrichtungen verwendet, die das abzuwiegende Produkt mit einer gewünschten Geschwindigkeit und einem gewünschten Durchsatz der Waage zuführen.

Als Fördervorrichtung dient häufig eine sogenannte Schwingförderrinne, bei der eine Rinne zur Aufnahme des Produkts durch einen Schwinger in mechanische Schwingungen versetzt wird, deren Richtung so ausgewählt ist, daß das Produkt in der Schwingförderrinne in diese Richtung fortbewegt wird. Steuert man die Amplitude der mechanischen Schwingungen des Schwingers, so kann die Fördergeschwindigkeit verändert und so, bei gleichbleibender Belegung der Schwingförderrinne, die Steuerung des Produktmengendurchsatzes erreicht werden.

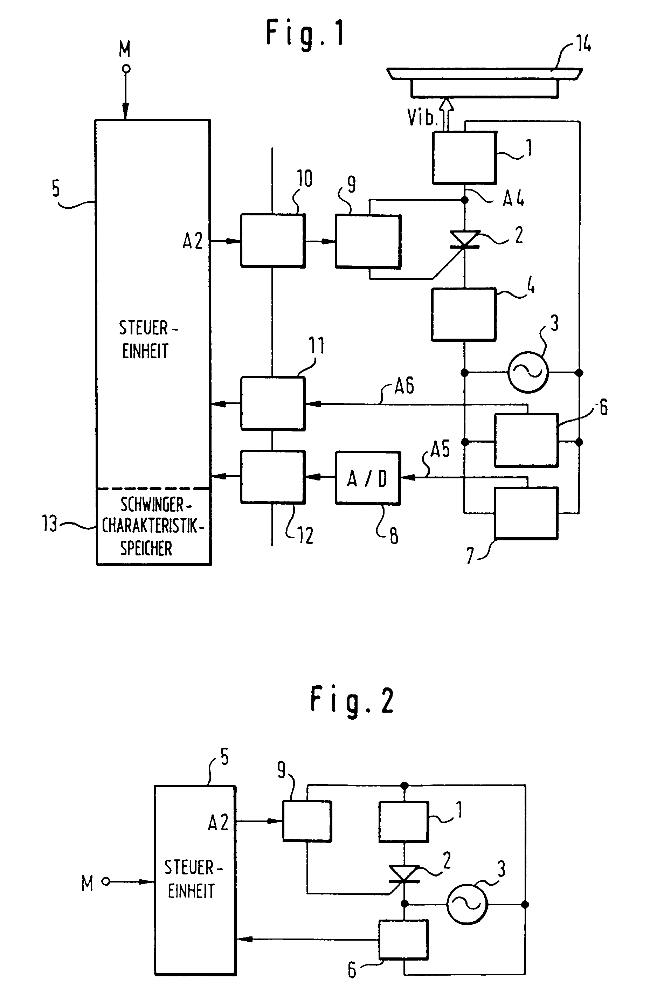

Ein Beispiel für eine herkömmliche Steuerung eines Schwingers ist in Figur 2 dargestellt. Ein elektromechanischer Schwinger 1, der eine nicht dargestellte Schwingförderrinne in mechanische Schwingungen versetzt, wird über ein Ansteuerungselement 2 von einer Wechselspannungsquelle 3 versorgt. Ein Null-Durchgangssensor 6 erfaßt die Zeitpunkte, an welchen die Wechselspannung von der Wechselspannungsquelle 3 jeweils einen Nulldurchgang durchführt, und übermittelt diese Zeitpunkte, beziehungsweise entsprechende Signale, an eine zentrale Steuereinheit 5. Die Steuereinheit 5 erhält von einer hierarchisch höheren Steuerebene eine Vorgabe für die Soll-Förderleistung des Schwingförderers durch einen vorgegebenen Sollwert M, und gibt ein entsprechendes Steuersignal A2 an eine Ansteuerungseinheit 9 ab, welche das Ansteuerungselement 2 durchschaltet.

Zwar arbeitet eine derartige Schwingfördereinrichtung grundsätzlich zufriedenstellend. Allerdings wirken sich Schwankungen der Wechselspannung in entsprechenden Schwankungen der Förderleistung aus, und der schädliche Einfluß derartiger Schwankungen wird noch verschlimmert, wenn ein Schwinger eine nicht-lineare Kennlinie aufweist. Darüber hinaus führt eine Änderung oder Schwankung der Frequenz der Wechselspannung zu einer Änderung beziehungsweise Schwankung der von dem Schwinger abgegebenen, mechanischen Schwingungen und damit ebenfalls zu nicht konstanten Mengenproduktdurchsätzen in der Fördervorrichtung. Wird ein Schwinger durch einen anderen Schwinger mit einer anderen Kennlinie ausgetauscht, so muß zur Erzielung beziehungsweise Beibehaltung eines gleichbleibenden Förderdurchsatzes die gesamte Steuerung mühsam an die Kennlinie des neuen Schwingers angepaßt werden.

Die DE-A-37 40 919 offenbart eine Vorrichtung zur Steuerung von Vibrationsförderern, in der einem Schwingungserzeuger von einer Phasenanschnittsteuerschaltung ein vorgegebener Stromflußwinkel der Versorgungswechselspannung zugeführt wird. Dieser Stromflußwinkel wird mittels eines Triacs eingestellt, der mittels eines vorgegebenen Triggersignals in zeitlicher Position zur jeweils anliegenden Halbwelle der speisenden Wechselspannung angesteuert wird. Dieser Triggerimpuls wird von einem Befehlswort abgeleitet, das von einem übergeordneten Kontroll-, Steuer- oder Regelungsorgan erzeugt wird.

Die DE-U-89 07 748 betrifft ein Regelgerät für elektromagnetische Schwingförderantriebe, das insbesondere zur Sollwertregelung bei wechselnder Belastung oder bei Schwankungen der Versorgungsspannung geeignet ist.

Zum Ausgleichen von Förderleistungsschwankungen, die durch unterschiedliche Beladungszustände der Schwingfördereinrichtung bewirkt werden, schlägt die DE-U-89 07 748 vor, einen durch eine Laständerung bewirkten Spannungsabfall als Istwertkomponente einem im Prinzip als Differenzverstärker arbeitenden Regelkreis-Stromdetektor zur Korrektur des Ansteuerwinkels der Phasenschnittsteuerung zuzuführen.

Der Erfindung liegt die Aufgabe zugrunde, eine Steuerung für Schwingfördereinrichtungen zur Verfügung zu stellen, welche eine konstante Förderleistung zur Verfügung stellt und einen einfachen Austausch des Schwingers ermöglicht.

Die Aufgabe wird mit einer Steuerung für Schwingfördereinrichtungen der eingangs beschriebenen Art erfindungsgemäß dadurch gelöst, daß zur Erfassung der Wechselspannung der Wechselspannungsquelle eine Spannungsüberwachungseinrichtung vorgesehen ist, die ein der Wechselspannung entsprechendes Vorgabesteuersignal an die zentrale Steuereinheit abgibt, daß in einem Schwingercharaktristik-Speicher eine spannungsabhängige Schwingercharakteristik abgelegt ist, und daß die Steuereinheit die Festlegung des Steuersignals in Abhängigkeit von dem Vorgabesteuersignal und der diesem entsprechenden Schwingercharakteristik vornimmt.

Dadurch, daß gemäß der vorliegenden Erfindung sowohl die Wechselspannung als auch die Schwingercharakteristik des jeweils verwendeten Schwingers erfaßt wird, läßt sich automatisch beispielsweise eine momentane Schwankung der Wechselspannung ausregeln, da bei der Auswirkung dieser Schwankung die individuelle Kennlinie des jeweils verwendeten Schwingers berücksichtigt wird. Ein Austausch eines Schwingers durch einen anderen erfordert keine mühsamen Anpassungsvorgänge, sondern nur die Berücksichtigung der entsprechenden neuen Schwingercharakteristik. Ändert sich die Frequenz der Wechselspannung, so kann dies ebenfalls durch eine entsprechend geänderte Schwingercharakteristik, nunmehr auf der Grundlage der geänderten Frequenz, berücksichtigt werden.

Hierzu wird vorzugsweise der Momentanwert und/oder die Frequenz der Wechselspannung überwacht. Die Schwingercharakteristik wird in einem hierfür vorgesehenen Schwingercharakteristik-Speicher elektronisch gespeichert, wobei die Schwingercharakteristik anhand eines Kennlinienfeldes oder aber auch mehrerer Kennlinienfelder, etwa jeweils eines für eine bestimmte Wechselspannungsfrequenz, gespeichert werden kann. Selbstverständlich ist statt einer Kennlinienfeldspeicherung in einem elektronischen Speicher auch beispielsweise eine Speicherung auf der Grundlage einer Tabelle, also von Tabellenwerten, möglich. Der Schwingercharakteristik-Speicher kann in der zentralen Steuereinheit vorgesehen sein, die vorzugsweise als Mikroprozessor oder sogenannter Mikrocontroller ausgebildet ist, oder als externer elektronischer Speicher ausgebildet sein, der gegebenenfalls leicht ausgetauscht werden kann. Vorzugsweise enthält der Schwingercharakteristik-Speicher Kennlinienfelder beziehungsweise Tabellen für mehrere verschiedene Schwinger, so daß bei einem Austausch eines Schwingers durch einen andersartigen Schwinger nur auf das entsprechende, neue Kennlinienfeld beziehungsweise eine neue Tabelle umgeschaltet werden muß.

Ein Nullspannungsdetektor sorgt für eine auf die jeweils vorhandene Wechselspannungsfrequenz angepaßte Zeit- bzw. Taktvorgabe, auf deren Grundlage der Zeitablauf des von der zentralen Steuereinheit abgegebenen Steuersignals festgelegt wird. Die Steuereinheit kann beispielsweise, je nach gewünschter Förderleistung, die Einschaltverzögerung des von ihr abgegebenen Steuersignals gegenüber dem Nullspannungssignal entsprechend festlegen, und auch entsprechend die Zeitdauer dieses Steuersignals.

Als Ansteuerungselement für den elektromechanischen Schwinger dient vorzugsweise ein elektronischer Leistungsschalter, und besonders bevorzugt ein Thyristor oder Triac. Zum Schutz des elektronischen Leistungsschalters kann eine diesem vorgeschaltete Überlastsicherungseinrichtung vorgesehen werden.

Wird in der Ansteuerungseinheit ein Energiespeicher zur begrenzten Verlängerung eines Einschaltsignals für den elektronischen Leistungsschalter vorgesehen, so lassen sich Energieverluste in der Ansteuerungseinheit und somit deren thermische Belastung auf ein Mindestmaß reduzieren. Als derartiger Energiespeicher kann beispielsweise ein Kondensator dienen.

Als elektromechanischer Schwinger ist vorzugsweise ein elektromagnetischer Schwinger vorgesehen.

Die Spannungsüberwachung durch die Spannungsüberwachungseinrichtung kann auf verschiedene Arten erfolgen. Da vorzugsweise die zentrale Steuereinheit digital arbeitet, sollte das ihr zugeführte Vorgabesteuersignal auch in digitaler Form vorliegen. Hierzu kann ein Analog/Digitalwandler eingesetzt werden, der ein von der Spannungsüberwachungseinrichtung abgegebenes, analoges Vorgabesteuersignal in ein entsprechendes Digitalsignal umwandelt. Dieser Analog/Digitalwandler kann als getrenntes Bauteil vorgesehen werden, oder aber beispielsweise als Teil der zentralen Steuereinheit.

Die erfindungsgemäße Steuerung für Schwingfördereinrichtungen kann mit nur einem elektromechanischen Schwinger versehen sein, oder aber mit mehreren derartigen Schwingern.

Um die Störsicherheit der zentralen Steuereinheit gegenüber äußeren Störungen zu erhöhen ist die Steuereinheit vorzugsweise durch Optokoppler von den übrigen Bauteilen galvanisch entkoppelt.

Die Erfindung wird nachstehend anhand zeichnerisch dargestellter Ausführungsbeispiele näher erläutert, aus welchen weitere Vorteile und Merkmale hervorgehen. Es zeigt:
- Fig. 1: eine erste Ausführungsform einer Steuerung für Schwingfördereinrichtungen gemäß der vorliegenden Erfindung;
- Fig. 2: eine vorbekannte Steuerung einer Fördereinrichtung, wobei die Fördervorrichtung nicht dargestellt ist;
- Fig. 3: eine zweite Ausführungsform einer Steuerung für Schwingfördereinrichtungen gemäß der vorliegenden Erfindung;
- Fig. 4: eine dritte Ausführungsform einer Steuerung für Schwingfördereinrichtungen gemäß der vorliegenden Erfindung;
- Fig. 5: ein Diagramm mit einer Darstellung des Einflusses einer Unter-und einer Überspannung auf die Kennlinie eines typischen Schwingers;
- Fig. 6: eine Ausführungsform einer Ansteuerungseinheit gemäß der vorliegenden Erfindung; und
- Fig. 7: typische Spannungs-bzw. Stromverläufe bei der Ansteuerungseinheit von Figur 6.

In Figur 1 ist eine erste Ausführungsform einer Steuerung für Schwingfördereinrichtungen gemäß der vorliegenden Erfindung dargestellt, wobei entsprechende Bauteile wie bei der vorbekannten Steuerung gemäß Figur 2 mit gleichen Bezugszeichen bezeichnet sind.

Eine Schwingförderrinne 14 als Fördervorrichtung wird von einem elektromagnetischen Schwinger 1 mit mechanischen Schwingungen (Vib) beaufschlagt. Hierzu wird von einer Wechselspannungsquelle 3 eine Wechselspannung über eine Überlastsicherungseinrichtung 4 einem Thyristor 2 zugeführt, der an den Schwinger 1 angeschlossen ist. Zum Einschalten oder "Zünden" des Thyristors 2 dient eine Ansteuerungseinheit 9, die über einen Optokoppler 10 von einer zentralen Steuereinheit 5 ein entsprechendes Steuersignal A2 empfängt.

Ein Nullspannungsdetektor 6 erfaßt die Nullspannungsdurchgänge der von der Wechselspannungsquelle 3 abgegebenen Wechselspannung und gibt ein entsprechendes Nullspannungssignal A6 über einen Optokoppler 11 an die zentrale Steuereinheit 5 ab. Eine Spannungsüberwachungseinrichtung 7 erfaßt den momentanen Spannungswert der von der Wechselspannungsquelle 3 abgegebenen Wechselspannung und gibt ein entsprechendes Analogsignal als analoges Vorgabe-Steuersignal A5 ab, das durch einen A/D-Wandler 8 in einen entsprechenden Digitalwert umgewandelt wird und über einen Optokoppler 12 an die zentrale Steuereinheit 5 abgegeben wird.

In der zentralen Steuereinheit 5 ist ein Schwingercharakteristik-Speicher 13 vorgesehen, in welchem die Charakteristik des Schwingers 1 gespeichert ist, etwa als Kennlinienfeld oder mehrere Kennlinienfelder, oder in Tabellenform.

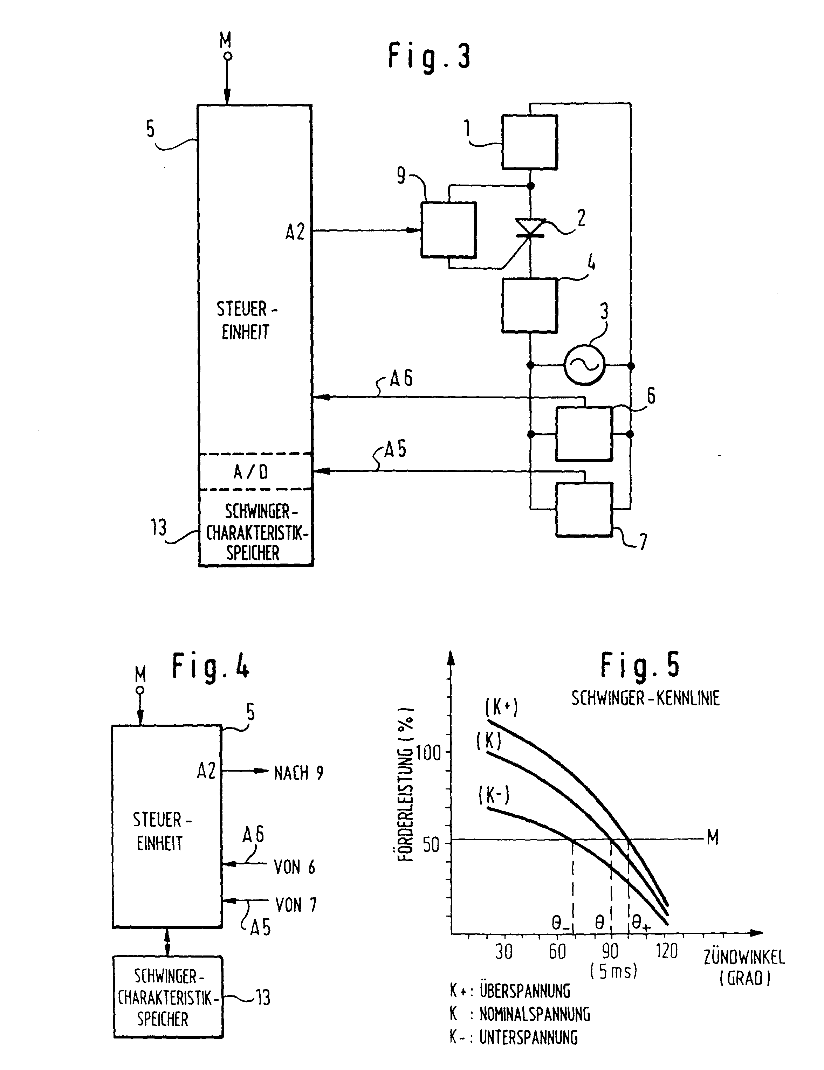

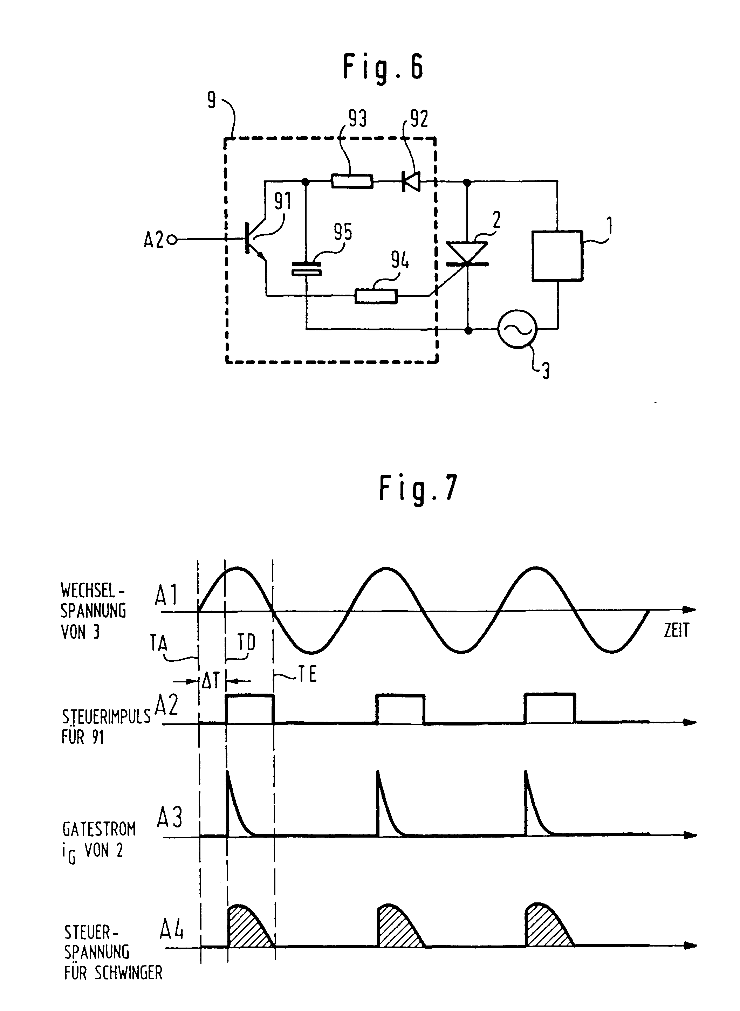

Figur 5 verdeutlicht den Einfluß einer zu hohen Wechselspannung (Überspannung) beziehungsweise einer zu niedrigen Wechselspannung (Unterspannung) auf die Förderleistung für eine typische Schwingercharakteristik, dargestellt anhand von dessen Kennlinie. Hierbei ist das Einschalten, die sogenannte Zündung des Thyristors 2, auf der Grundlage des sogenannten Zündwinkels Θ (in Grad) angegeben, bezogen auf den typischen Verlauf einer Wechselspannung, beispielsweise der Wechselspannung A1 in Figur 7, zwischen 0 und 360° in einer Periode.

Wie deutlich aus Figur 5 hervorgeht, wäre für eine nominelle Förderleistung von etwas über 50%, vorgegeben durch den entsprechenden Sollwert M, bei der Nominalspannung eine Zündung des Thyristors 2 bei einem Zündwinkel Θ von etwa 88° erforderlich. Eine Unterspannung (Kennlinie K-) führt jedoch dazu, daß der nunmehr erforderliche Zündwinkel für den gleichen Sollwert M der Förderleistung auf etwa 67° absinkt. Entsprechend steigt bei einer Überspannung der zur Erzielung desselben Sollwertes M erforderliche Zündwinkel für den Thyristor 2 auf etwa 97° an.

Wie im einzelnen die Zündwinkelsteuerung durch entsprechende Änderung des von der zentralen Steuereinheit 5 abgegebenen Steuersignals A2 für die Ansteuerungseinheit 9 des Thyristors 2 vorgenommen wird, wird nachstehend noch genauer in Zusammenhang mit Figur 7 erläutert.

In Figur 3 ist eine zweite Ausführungsform einer Steuerung für Schwingfördereinrichtungen gemäß der vorliegenden Erfindung dargestellt, die im wesentlichen der in Figur 1 gezeigten ersten Ausführungsform entspricht. Allerdings sind bei der zweiten Ausführungsform gemäß Figur 3 kein getrennter Analog/Digital-Wandler 8 sowie keine gesonderten Optokoppler vorgesehen. Vielmehr ist in der zentralen Steuereinheit 5 sowohl der Schwingercharakteristik-Speicher als auch ein eingebauter Analog/Digital-Wandler vorgesehen. Eine galvanische Trennung der zentralen Steuereinheit 5 von Figur 3 kann einmalig direkt vor der Steuereinheit 5 vorgesehen sein.

In Figur 4 ist ein Teil einer dritten Ausführungsform einer Steuerung für Schwingfördereinrichtungen gemäß der vorliegenden Erfindung dargestellt, die sich von den in den Figuren 1, 3 gezeigten Ausführungsformen darin unterscheidet, daß nunmehr ein getrennter, an die zentrale Steuereinheit 5 angeschlossener Schwingercharakteristik-Speicher (13) vorgesehen ist.

Figur 6 zeigt mit mehr Einzelheiten eine Ausführungsform einer Ansteuerungseinheit 9 gemäß der vorliegenden Erfindung, die bei den voranstehend beschriebenen, in den Figuren 1, 3 und 4 gezeigten Ausführungsformen der Erfindung eingesetzt werden kann.

An die Basis eines Schalttransistors 91 wird das von der zentralen Steuereinrichtung 5 abgegebene Steuersignal A2 angelegt. An den Kollektor des Transistors 91 ist ein Widerstand 93 angeschlossen, dessen anderes Ende mit einer Diode 92 verbunden ist, welche die Stromrichtung vorgibt. An den Emitter des Transistors 91 ist ein weiterer Widerstand 94 angeschlossen, der zusammen mit dem erstgenannten Widerstand 93 zur Strombegrenzung dient. Ein Kondensator 95 dient als Energiespeicher.

Wird durch ein entsprechendes Steuersignal A2 der Schalttransistor 91 durchgesteuert, so fließt ein Gate-Strom i_{G} des Thyristors 2 über die Diode 92 und die Strombegrenzungswiderstände 93, 94 von der Anode des noch nicht gezündeten Thyristors 2 in dessen Gate. Der Gatestrom wird von dem als Energiespeicher arbeitenden Kondensator 95 unterstützt, durch welchen auch nach dem Zünden des Thyristors 2, und dem sich hieraus ergebenden Spannungsabfall an dessen Anode, der Gatestrom i_{G} noch eine gewisse Zeit aufrecht erhalten wird, so daß eine sichere Zündung des Thyristors 2 erreicht wird. Ist die im Kondensator 95 gespeicherte Energie aufgebraucht, so kann kein Gatestrom mehr fließen, selbst wenn der Schalttransitor 91 noch durchgesteuert sein sollte. Daher wird mit einem minimalen Energieaufwand in der Ansteuerungseinheit 9 für die Zündimpulssteuerung des Thyristors 2 der Energieverlust und somit die thermische Belastung der Schaltung auf ein Mindestmaß reduziert.

Figur 7 zeigt typische Spannungs- beziehungsweise Stromverläufe in der Ansteuerungseinheit 9. Die von der Wechselspannungsquelle 3 abgegebene Wechselspannung ist durch A1 bezeichnet.

Die zweite, in Figur 7 dargestellte Signalform verdeutlicht das Steuersignal A2 für den Schalttransistor 91. Weiterhin sind hier die Zeitmarken angegeben, welche der beispielsweise in Figur 1 gezeigte Nullspannungsdetektor 6 als Nullspannungssignal A6 abgibt, nämlich zu einem ersten Zeitpunkt TA und einem zweiten Zeitpunkt TE in Figur 7 (für die erste Halbperiode der Wechselspannung A1). Abhängig von dem Sollwert M für die Förderleistung stellt nun die zentrale Steuereinheit 5 den Steuerimpuls A2 so ein, daß dieser um ein Zeitintervall ΔT gegenüber der ersten Nullspannungsmarke TA verzögert ist, also erst zu einem späteren Zeitpunkt TD beginnt, und dann bis zur zweiten Nullspannungsmarke TE andauert.

Der Gatestrom i_{G} des Thyristors 2 ist in Figur 7 als Signalform A3 dargestellt. Hieraus ergibt sich, wie im untersten Abschnitt von Figur 7 gezeigt ist, eine entsprechende Steuerspannung A4, welche an den Schwinger 1 angelegt wird.

## Patentansprüche

1. Steuerung für Schwingfördereinrichtungen mit zumindest einer Fördervorrichtung (14), die von zumindest einem elektromechanischen Schwinger (1) in mechanische Schwingungen (Vib) versetzt wird, der von einem Ansteuerungselement (2) mit einer Steuer-Wechselspannung (A4) versorgt wird, die von einer Ansteuerungseinheit (9) festgelegt wird, die ein Steuersignal (A2) von einer zentralen Steuereinheit (5) empfängt, der ein Förderleistungs-Sollwert (M) vorgebbar ist, und mit einer Wechselspannungsquelle (3) zur Versorgung des Ansteuerungselements (2) mit einer Wechselspannung (A1),
dadurch **gekennzeichnet,** daß
zur Erfassung der Wechselspannung (A1) der Wechselspannungsquelle (3) eine Spannungsüberwachungseinrichtung (7) vorgesehen ist, die ein der Wechselspannung (A1) entsprechendes Vorgabesteuersignal (A5) an die zentrale Steuereinheit (5) abgibt, daß in einem Schwingercharakteristik-Speicher (13) eine spannungsabhängige Schwingercharakteristik abgelegt ist, und daß die Steuereinheit (5) die Festlegung des Steuersignals (A2) in Abhängigkeit von dem Vorgabesteuersignal (A5) und der diesem entsprechenden Schwingercharakteristik vornimmt.

2. Steuerung für Schwingfördereinrichtungen nach Anspruch 1,
dadurch **gekennzeichnet,** daß die Spannungsüberwachungseinrichtung (7) zur Überwachung des Momentanwerts der Wechselspannung (A1) ausgebildet ist.

3. Steuerung für Schwingfördereinrichtungen nach Anspruch 1 oder 2,
dadurch **gekennzeichnet,** daß die Spannungsüberwachungseinrichtung (7) zur Überwachung der Frequenz der Wechselspannung (A1) ausgebildet ist.

4. Steuerung für Schwingfördereinrichtungen nach einem der Ansprüche 1 bis 3,
dadurch **gekennzeichnet,** daß die zentrale Steuereinheit (5) den Schwingercharakteristik-Speicher (13) zum Speichern der Charakteristik des Schwingers (1) aufweist.

5. Steuerung für Schwingfördereinrichtungen nach Anspruch 4,
dadurch **gekennzeichnet,** daß die Charakteristik des Schwingers (1) auf der Grundlage eines Kennlinienfeldes dargestellt ist.

6. Steuerung für Schwingfördereinrichtungen nach Anspruch 4,
dadurch **gekennzeichnet,** daß die Charakteristik des Schwingers (1) anhand einer Tabelle dargestellt ist.

7. Steuerung für Schwingfördereinrichtungen nach einem der Ansprüche 4 bis 6,
dadurch **gekennzeichnet,** daß in dem Schwingercharakteristik-Speicher (13) mehrere Charakteristiken für mehrere Schwinger (1) gespeichert sind.

8. Steuerung für Schwingfördereinrichtungen nach einem der Ansprüche 1 bis 7,
dadurch **gekennzeichnet,** daß ein Nullspannungsdetektor (6) zur Erfassung der Nulldurchgänge der Wechselspannung (A1) und zur Abgabe eines entsprechenden Nullspannungssignals (A6) an die zentrale Steuereinheit (5) vorgesehen ist, und daß die Steuereinheit (5) den Zeitablauf des Steuersignals (A2) entsprechend festlegt.

9. Steuerung für Schwingfördereinrichtungen nach Anspruch 8,
dadurch **gekennzeichnet,** daß die zentrale Steuereinheit (5) eine Einschaltverzögerung (ΔT) des Steuersignals (A2) gegenüber dem Nullspannungssignal (A6) festlegt.

10. Steuerung für Schwingfördereinrichtungen nach Anspruch 8 oder 9,
dadurch **gekennzeichnet,** daß die zentrale Steuereinrichtung (5) die Zeitdauer (TD-TE) des Steuersignals (A2) festlegt.

11. Steuerung für Schwingfördereinrichtungen nach einem der Ansprüche 1 bis 10,
dadurch **gekennzeichnet,** daß das Ansteuerungselement (2) als elektronischer Leistungsschalter ausgebildet ist.

12. Steuerung für Schwingfördereinrichtungen nach Anspruch 11,
dadurch **gekennzeichnet,** daß der elektronische Leistungsschalter ein Thyristor ist.

13. Steuerung für Schwingfördereinrichtungen nach Anspruch 11,
dadurch **gekennzeichnet,** daß der elektronische Leistungsschalter ein Triac ist.

14. Steuerung für Schwingfördereinrichtungen nach einem der Ansprüche 11 bis 13,
dadurch **gekennzeichnet,** daß dem Ansteuerungselement (2) eine Überlastsicherung (4) vorgeschaltet ist.

15. Steuerung für Schwingfördereinrichtungen nach einem der Ansprüche 11 bis 14,
dadurch **gekennzeichnet,** daß die Ansteuerungseinheit (9) einen Energiespeicher (95) zur begrenzten Verlängerung eines Einschaltsignals für den elektronischen Leistungsschalter aufweist.

16. Steuerung für Schwingfördereinrichtungen nach Anspruch 15,
dadurch **gekennzeichnet,** daß der Energiespeicher (95) als Kondensator ausgebildet ist.

17. Steuerung für Schwingfördereinrichtungen nach einem der Ansprüche 1 bis 16,
dadurch **gekennzeichnet,** daß der Schwinger (1) als elektromagnetischer Schwinger ausgebildet ist.

18. Steuerung für Schwingfördereinrichtungen nach einem der Ansprüche 1 bis 17,
dadurch **gekennzeichnet,** daß der Spannungsüberwachungseinrichtung (7) ein Analog/Digital-Wandler (8) zur Umwandlung eines analogen Vorgabesteuersignals (A5) in ein entsprechendes Digitalsignal nachgeschaltet ist.

19. Steuerung für Schwingfördereinrichtungen nach einem der Ansprüche 1 bis 18,
dadurch **gekennzeichnet,** daß mehr als ein Schwinger (1) vorgesehen ist.

20. Steuerung für Schwingfördereinrichtungen nach einem der Ansprüche 1 bis 19,
**gekennzeichnet** durch zumindest einen Optokoppler (10,11,12) zur galvanischen Abtrennung der Steuereinheit (5).

## Claims

1. Control device for oscillating conveyor systems with at least one conveyor apparatus (14) which is set in mechanical oscillation (Vib) by at least one electromechanical oscillator (1) which is supplied by a driving element (2) with an a.c. control voltage (A4) which is fixed by a driving unit (9) which receives a control signal (A2) from a central control unit (5) for which a nominal conveying output value (M) can be preset, and with an a.c. voltage source (3) for supplying the driving element (2) with an a.c. voltage (A1), characterised in that, for detection of the a.c. voltage (A1) of the a.c. voltage source (3), there is provided a voltage monitoring device (7) which transmits a standard control signal (A5) corresponding to the a.c. voltage (Al) to the central control unit (5), in that a voltage-dependent oscillator characteristic is filed in an oscillator characteristic memory (13), and in that the control unit (5) performs fixing of the control signal (A2) as a function of the standard control signal (A5) and the oscillator characteristic corresponding to the latter.

2. Control device for oscillating conveyor systems according to claim 1, characterised in that the voltage monitoring device (7) is designed to monitor the instantaneous value of the a.c. voltage (A1).

3. Control device for oscillating conveyor systems according to claim 1 or 2, characterised in that the voltage monitoring device (7) is designed to monitor the frequency of the a.c. voltage (A1).

4. Control device for oscillating conveyor systems according to any of claims 1 to 3, characterised in that the central control unit (5) comprises the oscillator characteristic memory (13) for storage of the characteristic of the oscillator (1).

5. Control device for oscillating conveyor systems according to claim 4, characterised in that the characteristic of the oscillator (1) is shown on the basis of a family of characteristics.

6. Control device for oscillating conveyor systems according to claim 4, characterised in that the characteristic of the oscillator (1) is shown with the aid of a table.

7. Control device for oscillating conveyor systems according to any of claims 4 to 6, characterised in that in the oscillator characteristic memory (13) are stored several characteristics for several oscillators (1).

8. Control device for oscillating conveyor systems according to any of claims 1 to 7, characterised in that a no-voltage detector (6) is provided for detection of the zero crossings of the a.c. voltage (Al) and for transmission of a corresponding no-voltage signal (A6) to the central control unit (5), and in that the control unit (5) fixes accordingly the time lapse of the control signal (A2).

9. Control device for oscillating conveyor systems according to claim 8, characterised in that the central control unit (5) fixes a cut-in delay (AT) of the control signal (A2) in relation to the no-voltage signal (A6).

10. Control device for oscillating conveyor systems according to claim 8 or 9, characterised in that the central control device (5) fixes the duration (TD-TE) of the control signal (A2).

11. Control device for oscillating conveyor systems according to any of claims 1 to 10, characterised in that the driving element (2) is designed as an electronic power switch.

12. Control device for oscillating conveyor systems according to claim 11, characterised in that the electronic power switch is a thyristor.

13. Control device for oscillating conveyor systems according to claim 11, characterised in that the electronic power switch is a triac.

14. Control device for oscillating conveyor systems according to any of claims 11 to 13, characterised in that an overload protector device (4) is connected to the input of the driving element (2).

15. Control device for oscillating conveyor systems according to any of claims 11 to 14, characterised in that the driving unit (9) comprises an energy storage device (95) for prolonging to a limited extent a cut-in signal for the electronic power switch.

16. Control device for oscillating conveyor systems according to claim 15, characterised in that the energy storage device (95) is designed as a capacitor.

17. Control device for oscillating conveyor systems according to any of claims 1 to 16, characterised in that the oscillator (1) is designed as an electromagnetic oscillator.

18. Control device for oscillating conveyor systems according to any of claims 1 to 17, characterised in that an analogue-to-digital converter (8) for conversion of an analogue standard control signal (A5) to a corresponding digital signal is connected to the output of the voltage monitoring device (7).

19. Control device for oscillating conveyor systems according to any of claims 1 to 18, characterised in that more than one oscillator (1) is provided.

20. Control device for oscillating conveyor systems according to any of claims 1 to 19, characterised by at least one optoelectronic coupler (10, 11, 12) for electrically isolating the control unit (5).

## Revendications

1. Un dispositif de commande pour transporteurs à vibrations, avec au moins un dispositif de transport (14), mis en vibrations mécaniques (Vib) par au moins un vibreur (1) électromécanique, alimenté par un élément d'attaque (2), avec une tension alternative de commande (A4), qui est fixée par une unité d'attaque (9), recevant un signal (A2) depuis une unité de commande (5), à laquelle peut être allouée une valeur de consigne de puissance de transport (M) et avec une source de tension alternative (3) destinée à l'alimentation de l'élément d'attaque (2) avec une tension alternative (A1),
caractérisé en ce que,
pour appréhender la tension alternative (A1) de la source de tension alternative (3) est prévu un dispositif de surveillance de tension (7) qui fournit à l'unité de commande centrale un signal de commande de réglage (45) correspondant à la tension alternative (A1), en ce qu'une caractéristique de vibreur dépendant de la tension est stockée dans une mémoire à caractéristiques de vibreur (13), et en ce que l'unité de commande (5) effectue la fixation du signal de commande (A2) en fonction du signal de commande de réglage (A5) et de la caractéristique de vibreur correspondante à celui-ci.

2. Dispositif de commande pour des transporteurs à vibrations selon la revendication 1,
caractérisé en ce que la dispositif de surveillance de tension 7 est réalisé pour surveiller la valeur instantanée de la tension alternative (A1).

3. Dispositif de commande pour des transporteurs à vibrations selon la revendication 1 ou 2,
caractérisé en ce que le dispositif de surveillance de tension (7) est réalisé pour surveiller la fréquence de la tension alternative (A1).

4. Dispositif de commande pour des transporteurs à vibrations selon l'une des revendications 1 à 3,
caractérisé en ce que l'unité de commande centrale (5) comporte la mémoire à caractéristiques de vibreur (13) pour stocker la caractéristique du vibreur (1).

5. Dispositif de commande pour des transporteurs à vibrations selon la revendication 4,
caractérisé en ce que la caractéristique du vibreur (1) est représentée sur la base d'un champ de caractéristiques.

6. Dispositif de commande pour des transporteurs à vibrations selon la revendication 4,
caractérisé en ce que la caractéristique du vibreur (1) est représentée à l'aide d'un tableau.

7. Dispositif de commande pour des transporteurs à vibrations selon l'une des revendications 4 à 6,
caractérisé en ce que plusieurs caractéristiques, concernant plusieurs vibreurs (7), sont mémorisées dans la mémoire à caractéristiques de vibreur (13).

8. Dispositif de commande pour des transporteurs à vibrations selon l'une des revendications 1 à 7,
caractérisé par le fait qu'un détecteur de tension zéro (6) est prévu pour appréhender les passages à zéro de la tension alternative (A1) et pour fournir un signal de tension zéro (A6) correspondant à l'unité de commande centrale (5), et en ce que l'unité de commande (5) fixe de manière correspondante le déroulement temporel du signal de commande (A2).

9. Dispositif de commande pour des transporteurs à vibrations selon la revendication 8,
caractérisé en ce que l'unité de commande centrale (5) fixe un retard à la mise en service (AT) du signal de commande (A2) par rapport au signal de tension zéro (A6).

10. Dispositif de commande pour des transporteurs à vibrations selon la revendication 8 ou 9,
caractérisé en ce que le dispositif de commande central (5) fixe la durée (TD-TE) du signal de commande (A2).

11. Dispositif de commande pour des transporteurs à vibrations selon l'une des revendications 1 à 10,
caractérisé en ce que l'élément d'attaque (2) est un interrupteur de puissance électronique.

12. Dispositif de commande pour des transporteurs à vibrations selon la revendication 11,
caractérisé en ce que l'interrupteur de puissance électronique est un thyristor.

13. Dispositif de commande pour des transporteurs à vibrations selon la revendication 11,
caractérisé en ce que l'interrupteur de puissance électronique est un triac.

14. Dispositif de commande pour des transporteurs à vibrations selon l'une des revendications 11 à 13, caractérisé en ce qu'en amont de l'élément d'attaque (2) est branchée une sécurité de surcharge (4).

15. Dispositif de commande pour des transporteurs à vibrations selon l'une des revendications 11 à 14, caractérisé en ce que l'unité d'attaque (9) présente un accumulateur d'énergie (95) destiné à prolonger de façon limitée un signal de mise en service destiné à l'interrupteur de mise en puissance électronique.

16. Dispositif de commande pour des transporteurs à vibrations selon la revendication 15,
caractérisé en ce que l'accumulateur d'énergie (95) est réalisé sous la forme de condensateur.

17. Dispositif de commande pour des transporteurs à vibrations selon l'une des revendications 1 à 16,
caractérisé en ce que le vibreur (1) est réalisé sous la forme de vibreur électromagnétique.

18. Dispositif de commande pour des transporteurs à vibrations selon l'une des revendications 1 à 17,
caractérisé en ce que, en aval du dispositif de surveillance de tension (7), est branché un convertisseur analogique/numérique (8) destiné à convertir un signal de commande de réglage (A5) analogique en un signal numérique correspondant.

19. Dispositif de commande pour des transporteurs à vibrations selon l'une des revendications 1 à 18,
caractérisé en ce qu'il est prévu plus qu'un vibreur (1).

20. Dispositif de commande pour des transporteurs à vibrations selon l'une des revendications 1 à 19,
caractérisé par au moins un optocoupleur (10, 11, 12) destiné à assurer la séparation galvanique de l'unité de commande (5).
